# EUROPEAN PATENT APPLICATION

(11) **EP 1 954 090 A1**
(43) Date of publication of application: **06.08.2008**
(21) Application number: 07300774.2
(22) Date of filing: 05.02.2007
(51) Int. Cl.: H04Q 7/38

(54) **A method for handover of a user terminal**

(71) Applicant: Alcatel Lucent, 75008 Paris (FR)
(72) Inventor: Kaminski, Stephen, 73054 Eislingen (DE); Gruber, Markus, 70825 Korntal-Münchingen (DE); Ambrosy, Anton, 75233 Tiefenbronn (DE)
(74) Representative: Brose, Gerhard

(57) **Abstract**

The invention concerns a method for a handover procedure of a user terminal (UE) on radio interfaces from a source base station (SBS) to a target base station (TBS) by means of at least one handover message of the Radio Resource Control protocol sent from the user terminal (UE) whereby at least one status report of the Radio Link Control layer at least indicating or allowing for a determination which data has to be retransmitted to the user terminal (UE) is attached to at least one handover message of the Radio Resource Control protocol, a base station (BS1-BS8), a user terminal (UE) and a network (CN) therefor.

## Description

The invention relates to a method for a handover procedure of a user terminal on radio interfaces according to the preamble of claim 1, a base station according to the preamble of claim 8, a user terminal according to the preamble of claim 9 and a communication network according to the preamble of claim 10.

Handover procedures of user terminals in cellular networks are often performed due to degradation of the radio conditions in the serving cell. Upon handover, in order to avoid data loss, the source base station forwards data that has not been successfully received by the user terminal to the target base station. The target base station retransmits and prioritizes the data forwarded by the source base station as soon as it obtains the data.

Such a handover procedure according to the prior art is e.g. described for evolved UMTS (UMTS = Universal Mobile Telecommunication System) in chapter 10.1.2 of 3GPP TS 36.300 V0.3.1 (2006-11): "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)".

There, it is disclosed that during a so-called intra-LTE inter-eNB handover (LTE = Long Term Evolution; eNB = enhanced NodeB), downlink data is forwarded from the source eNB to the target eNB. It is also disclosed to only retransmit the downlink RLC SDUs (RLC = Radio Link Control; SDU = Service Data Unit) not successfully received by the user terminal. In order to make this feature work, the user terminal has to send a status report specifying or allowing for a determination which Service Data Units it still expects. Now the question arises when and how to send this status report.

The object of the invention is thus to propose a method for a handover procedure that enables the target base station to retransmit data that has been sent by the source base station and that has not been successfully received by the user terminal by means of a status report indicating said data or allowing for a determination of said data that has to be retransmitted.

This object is achieved by a method according to the teaching of claim 1, a base station according to the preamble of claim 8, a user terminal according to the preamble of claim 9 and a network according to the preamble of claim 10.

The main idea of the invention is to attach a status report indicating or allowing for a determination which data has to be retransmitted to the user terminal to a handover message sent from the user terminal. By means of using such a handover message as a container for such a status report, the transmission of individual messages, which would increase the complexity of the protocol and decrease the efficiency of the radio interface, is avoided.

According to the invention, use of a Radio Resource Control (RRC) handover message as a container for the status report is proposed.

Further developments of the invention can be gathered from the dependent claims and the following description.

In the following the invention will be explained further making reference to the attached drawings.
Fig. 1 schematically shows a communication network in which the invention can be implemented.
Fig. 2 schematically shows exemplarily a possible data flow for intra-LTE inter-eNB handover for a first embodiment of the invention.
Fig. 3 schematically shows exemplarily a possible data flow for intra-LTE inter-eNB handover for a second embodiment of the invention.

A network in which the invention can be implemented comprises user terminals and base stations.

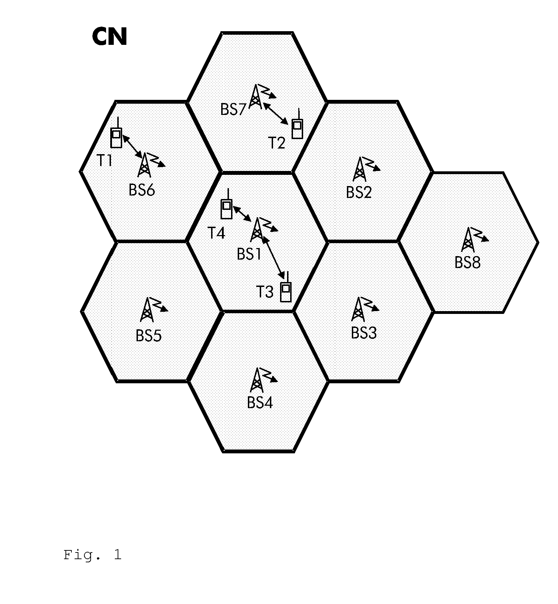

Fig. 1 shows an example for such a network CN that comprises base stations BS1-BS8 and user terminals T1-T4.

Each of said user terminals T1-T4 is connected to one or multiple of said base stations BS1-BS8, which is symbolized by double arrows in fig. 1. The base stations BS1-BS8 are in turn connected to a core network, which is not shown in fig. 1 for the sake of simplicity.

The user terminals T1-T4 comprise the functionality of a user terminal for transmission and reception of signaling and data messages in a network using radio transmission.

Furthermore, a user terminal according to the invention is adapted to perform sending of at least one status report of the Radio Link Control layer that at least indicates or allows for a determination which data has to be retransmitted to the user terminal (UE) and that is attached to at least one handover message of the Radio Resource Control protocol.

The base stations BS1-BS8 comprise the functionality of a base station of a network using radio transmission, i.e. they provide the possibility for user terminals to get connected to said network and for data exchange of said user terminals by means of radio transmission.

Furthermore, a base station BS1-BS8 according to the invention is adapted to perform reception and evaluation of at least one status report of the Radio Link Control layer that at least indicates or allows for a determination which data has to be retransmitted to the user terminal (UE) and that is attached to at least one handover message of the Radio Resource Control protocol.

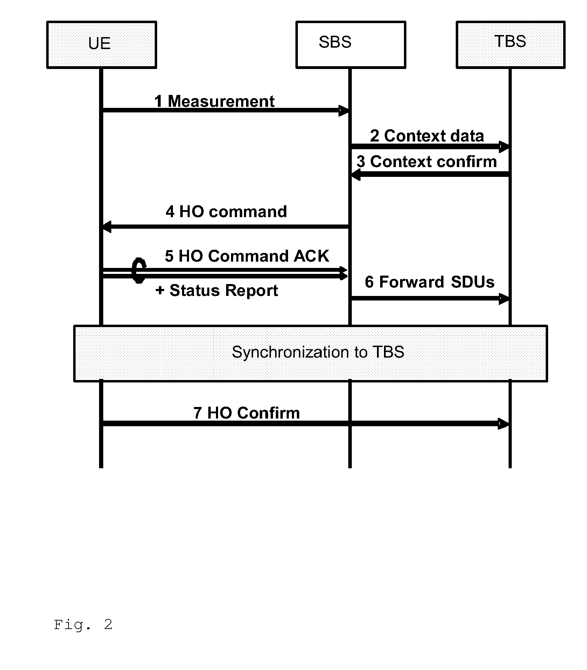

Fig. 2 shows a possible principle data flow for intra-LTE inter-eNB handover for a first embodiment of the invention based on the prior art disclosed in chapter 10.1.2 of 3GPP TS 36.300 V0.3.1 (2006-11) which will be described in the following.

In step 1, the user terminal UE sends measurement reports comprising information about the radio quality of the downlink radio interface of at least one neighboring base station to the source base station SBS.

In step 2, the source base station SBS makes decision based on the measurement reports and Radio Resource Management information to hand off the user terminal UE to the target base station TBS. The source base station SBS prepares the target base station TBS for handover and passes context data in the handover request to the target base station TBS. The context data comprises e.g. the QoS profiles (QoS = Quality of Service) of the so-called SAE bearers (SAE = System Architecture Evolution).

In step 3, the target base station TBS prepares the handover and responds to the source base station SBS by providing a new C-RNTI (C-RNTI = Cell Radio Network Temporary Identity) and possibly some other parameters, as e.g. access parameters or so-called System Information Blocks (SIBs). After reception of accepted preparation of the handover from the target base station TBS, the source base station SBS is prepared to forward data packets to the target base station TBS.

In step 4, the user terminal UE is commanded by the source base station SBS entity to perform the handover, and target side radio resource information, as e.g. the new C-RNTI, the starting time of the handover or the target base station System Information Blocks, is contained in the handover command message.

In step 5, the user terminal UE acknowledges the reception of the handover command message with an acknowledgment procedure by means of sending a handover command acknowledgement message to the source base station SBS. Recently, the usage of a handover command acknowledgement message on the Radio Resource Control protocol has been proposed in the proposal R2-070178 with the title "Reliability Considerations for the Handover Command" during 3GPP TSG-RAN#56-bis WG 2 LTE meeting in Sorrento, Italy (15^{th} January- 19^{th} January 2007).

The user terminal UE needs to notify the source base station SBS which downlink Radio Link Control Service Data Units it did not yet receive successfully, so that said downlink Radio Link Control Service Data Units can be retransmitted to the user terminal UE. Such a notification that indicates or allows for a determination which Radio Link Control Service Data Units have to be retransmitted can be sent to the source base station SBS comprised in a status report.

According to the invention, in order to avoid a separate, independent status report message of the Radio Link Control layer, the status report is attached to at least one handover message of the Radio Resource Control protocol sent from the user terminal UE, i.e. a Radio Resource Control instance within the user terminal UE forces the Radio Link Control layer to append a status report to a Radio Resource Control message. Each Radio Link Control instance of the user terminal UE is able to append a status report to a specific Radio Resource Control message e.g. on request by a Radio Resource Control instance.

The usage of only one message for sending the status report and said at least one handover message has an advantage compared to the case of using two separate messages for the status report and said at least one handover message, as the two messages would be sent separately and would thus often arrive in the base station at different times depending on the sending time and the number of necessary retransmissions. The base station then would have to wait until it received both messages before it can assume that the handover will be performed by the user terminal UE. Using two separate messages for the status report and said at least one handover message additionally has the drawback that the handover procedure is much more complex due to a variation of different error cases arising from lost messages. Finally, sending the status report to the source base station SBS at the latest possible time, which is determined by sending the handover command acknowledgement message to the source base station SBS, indicates the latest status or allows for a determination of the latest status of not successful received Service Data Units by the user terminal UE, which must be forwarded to the target base station TBS.

In the embodiment depicted in fig. 2, the status report is attached to the handover command acknowledgement message of the Radio Resource Control protocol sent from the user terminal UE to the source base station SBS.

In step 6, the source base station SBS forwards downlink Radio Link Control Service Data Units, starting from the first Service Data Unit that has not been successfully received by the user terminal UE, to the target base station TBS.

After reaching of the starting time announced in the handover command message, the user terminal UE performs synchronization to the target base station TBS and then starts acquiring uplink resources and the new uplink timing advance.

The target base station TBS retransmits and prioritizes all downlink Radio Link Control Service Data Units forwarded by the source base station SBS as soon as it obtains them.

In step 7, the user terminal UE uses the acquired uplink resources and the new uplink timing advance to send a handover confirm message to the target base station TBS, which completes the handover procedure for the user terminal UE.

Then, the target base station TBS notifies the success of the handover to the source base station SBS (not shown in fig. 2), which may then e.g. release the radio bearer and clear already forwarded data from its buffers. The source base station SBS still continues forwarding data for the user terminal UE if it has some in its buffers or if the user plane entity (UPE) still forwards data to it.

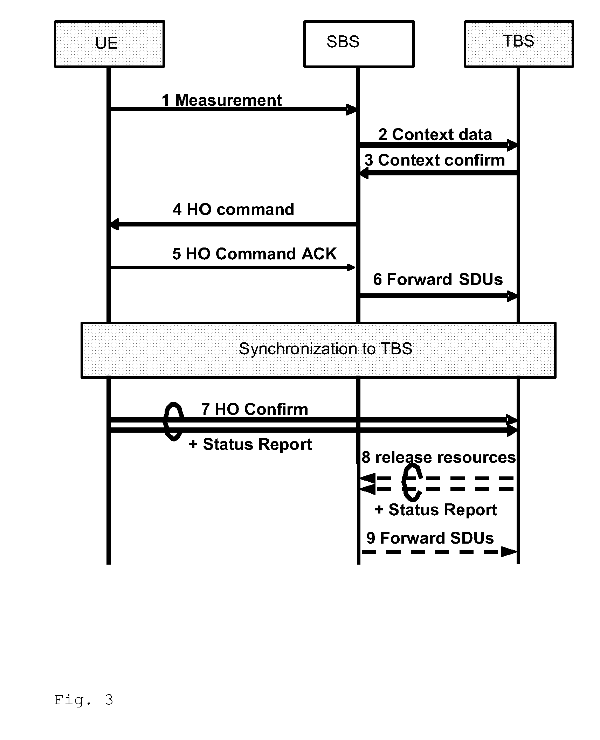

Fig. 3 shows a possible principle data flow for intra-LTE inter-eNB handover for a second embodiment of the invention. In the following, the differences with respect to the first embodiment of the invention disclosed in fig. 2 will be described on the basis of fig. 3.

Steps 1-4 of the second embodiment of the invention are similar to the steps 1-4 of the first embodiment of the invention.

In step 5, in contrary to the first embodiment, the user terminal UE only acknowledges the reception of the handover command message with an acknowledgment procedure by means of sending a handover command acknowledgement message to the source base station SBS, and no notification indicating or allowing for a determination which Radio Link Control Service Data Units have to be retransmitted is sent from the user terminal UE to the source base station SBS in this step 5. The presence of step 5 is optional in this embodiment.

In step 6, in contrary to the first embodiment, the source base station SBS forwards all downlink Radio Link Control Service Data Units to the target base station TBS, not only the downlink Radio Link Control Service Data Units that have not been received successfully by the user terminal UE.

After reaching of the starting time announced in the handover command message, the user terminal UE performs synchronization to the target base station TBS and then starts acquiring uplink resources and the new uplink timing advance.

In step 7, the user terminal UE uses the acquired uplink resources and the new uplink timing advance to send a handover confirm message to the target base station TBS, which completes the handover procedure for the user terminal UE. In contrary to the first embodiment, additionally a notification that indicates or allows for a determination which Radio Link Control Service Data Units have to be retransmitted is sent to the target base station TBS comprised in a status report. Said status report is attached to the handover confirm message of the Radio Resource Control protocol sent from the user terminal UE to the target base station TBS in step 7.

In a third embodiment based on the second embodiment described above, in step 8, after reception of the status report, the target base station TBS sends a release resources message to the source base station SBS indicating to release the resources related to the user terminal UE with the status report being attached to the release resource message in order to notify the source base station SBS which downlink Radio Link Control Service Data Units the user terminal UE did not receive successfully. Alternatively, the status report can also be sent in a separate message from the target base station TBS to the source base station SBS.

Then, instead of step 6, in which the source base station SBS forwards all downlink Radio Link Control Service Data Units to the target base station TBS, in step 9, the source base station SBS forwards downlink Radio Link Control Service Data Units, starting from the first Service Data Unit that has not been successfully received by the user terminal UE, to the target base station TBS.

One of the main arguments for sending the status report after synchronization of the user terminal UE to the target base station TBS is, that it can be combined with the handover confirm message of the Radio Resource Control protocol, as presently, no Radio Resource Control messages that could serve as a container before synchronization is planned to be used. However, the situation is different, if a handover command acknowledgement message of the Radio Resource Control protocol is additionally present that can be used for attaching a status report before synchronization. Depending on the radio characteristics upon which the handover will be invoked, the quality of the radio interface to the source base station (SBS) may already be very bad. Hence, another advantage of sending the status report after synchronization of the user terminal UE to the target base station TBS is, that the transmission of the status report to the target base station (TBS) may be performed under better radio conditions.

The sending of the status report can either be performed regularly before or after synchronization of the user terminal UE to the target base station TBS, or be initiated by explicit polling before or after synchronization.

In case of sending the status report regularly before or after synchronization, the source base station SBS does not need to ask for a status report, as the status report is sent automatically. However, for many bearers HARQ feedback (HARQ = Hybrid Automatic Repeat Request) may be sufficient to know the status of the Radio Link Control Service Data Units for the user terminal UE, so that there would be no need for a status report in this case.

In case of explicit polling for sending the status report, the polling procedure is preferably started at the time of handover initiation by the source base station SBS, i.e. when the handover command message is sent to the user terminal UE. The handover command message represents an ideal point of time for starting the polling procedure, because if the polling procedure would be started earlier, the source base station SBS would be bound to stall the downlink transmission earlier than necessary and would therefore introduce an interruption delay.

As the status report is used to indicate the data that has to be forwarded or allows for a determination of the data that has to be forwarded from the source base station SBS to the target base station TBS, to avoid any ambiguity, the downlink scheduling in the source base station SBS should at the latest be stopped in the same Transmission Time Interval (TTI) in which the polling indication is sent.

In an embodiment of the invention, the source base station SBS generates the handover command message at the Radio Resource Control protocol and attaches a poll indication to it, which indicates the request for a status report in reverse direction, in order to avoid the sending of a separate message comprising the poll indication. Preferably, the poll indication also indicates that the status report has to be sent attached to a specific Radio Resource Control protocol message, e.g. the handover command acknowledgement message or attached to a handover confirm message.

## Claims

1. A method for a handover procedure of a user terminal (UE) on radio interfaces from a source base station (SBS) to a target base station (TBS) using at least one handover message of the Radio Resource Control protocol sent from the user terminal (UE) **characterized in, that** at least one status report of the Radio Link Control layer at least indicating or allowing for a determination which data has to be retransmitted to the user terminal (UE) is attached to said at least one handover message of the Radio Resource Control protocol.

2. A method according to claim 1, **characterized in, that** the sending of said at least one status report is initiated by means of attaching a poll indication to at least one handover message of the Radio Resource Control protocol sent to the user terminal (UE) which indicates the request for said at least one status report.

3. A method according to claim 1, **characterized in, that** the sending of said at least one status report is initiated by a Radio Resource Control instance.

4. A method according to claim 1, **characterized in, that** said at least one status report is attached to a message which acknowledges the handover command (HO Command ACK) sent from the user terminal (UE) to the source base station (SBS) before synchronization of the user terminal (UE) with the target base station (TBS).

5. A method according to claim 1, **characterized in, that** said at least one status report is attached to a message which confirms the handover (HO Confirm) sent from the user terminal (UE) to the target base station (TBS) after synchronization of the user terminal (UE) with the target base station (TBS).

6. A method according to claim 5, **characterized in, that** the target base station (TBS) sends the at least one status report to the source base station (SBS).

7. A method according to claim 1, **characterized in, that** the at least one status report comprises information from at least one Radio Link Control instance of the user terminal (UE).

8. A base station (BS1-BS8) adapted to perform a handover procedure of a user terminal (UE) on radio interfaces from a source base station (SBS) to a target base station (TBS), **characterized in, that** said base station (BS1-BS8) comprises at least one processing means adapted to perform reception and evaluation of at least one status report of the Radio Link Control layer that at least indicates or allows for a determination which data has to be retransmitted to the user terminal (UE) and that is attached to at least one handover message of the Radio Resource Control protocol.

9. A user terminal (UE) adapted to perform a handover procedure of a user terminal (UE) on radio interfaces from a source base station (SBS) to a target base station (TBS), **characterized in, that** said user terminal (UE) comprises at least one processing means adapted to perform sending of at least one status report of the Radio Link Control layer that at least indicates or allows for a determination which data has to be retransmitted to the user terminal (UE) and that is attached to at least one handover message of the Radio Resource Control protocol.

10. A communication network (CN) using radio transmission adapted for performing a handover procedure of a user terminal from a source base station (SBS) to a target base station (TBS) **characterized in, that** said network (CN) comprises
- at least one user terminal (UE) comprising at least one processing means adapted to perform sending of at least one status report of the Radio Link Control layer that at least indicates or allows for a determination which data has to be retransmitted to the user terminal (UE) and that is attached to at least one handover message of the Radio Resource Control protocol,
- and at least one base station (BS1-BS8) comprising at least one processing means adapted to perform reception and evaluation of at least one status report of the Radio Link Control layer that at least indicates or allows for a determination which data has to be retransmitted to the user terminal (UE) and that is attached to at least one handover message of the Radio Resource Control protocol.
